# EUROPEAN PATENT APPLICATION

(11) **EP 2 107 446 A1**
(43) Date of publication of application: **07.10.2009**
(21) Application number: 08103380.5
(22) Date of filing: 04.04.2008
(51) Int. Cl.: G06F 3/042

(54) **System and a method for tracking input devices on LC-displays**

(71) Applicant: ETH Zurich, 8092 Zürich (CH)
(72) Inventor: Kunz, Andreas, 8044, Zürich (CH); Hofer, Ramon, 8604, Volketswil (CH); Kaplan, Patrick, 88699, Frickingen (DE)
(74) Representative: Kley, Hansjörg

(57) **Abstract**

A lot of existing technologies for tangible user interface tracking use back- or front-projection setups, but they suffer from poor image quality, shadow casting, non-ergonomic interaction, and/or large installations. The known drawbacks are eliminated with infrared photodiodes mounted behind a display's LC-matrix to track infrared diodes in front of the LC-matrix. The sensors are addressed through a modular master-slave circuit. Using several interaction devices, multiuser interaction is possible.

## Description

The present invention relates to a system and a method for the tracking of input devices on LC-displays according to the preamble of claim 1 respectively of claim 10.

### Field of the invention

Since a tangible approach to computer interaction has been the focus of many researchers, a lot of different technologies exist today to track objects like bricks [1], [2], pens [3], or finger touch [4],[5] on a surface. Most of the newer systems also provide means to simultaneously track multiple devices. What most systems have in common is that they either use a back-projection [6], or a front-projection [7], [8] and use cameras to track devices. Even the new product from Microsoft [9] called «Surface» bases on a back-projection technology.

Front-projection as well as back-projection have specific advantages and drawbacks. A front-projection onto a horizontal interaction surface (tabletop) allows ergonomic working in a sitting position. However, the user also casts a shadow that prohibits a very precise interaction on the surface. Back-projection systems allow a more precise interaction, e.g. writing on a tabletop, but require space for the optical path length. This typically prohibits any ergonomic work in a sitting position or any application in laptop like devices.

In i-LAND [10], a 48" plasma-display was used to realize a tabletop setup. Here, a resistive overlay allowed tracking of a single user's input at a time. It did not provide any multiuser input. This means that even placing the forearm on the screen resulted in misinterpretations of the tracking - bimanual working or tracking of multiple devices was not possible.

In order to encounter this problem, two WACOM tablets were modified in such a way that they recognized multiple «pucks» as input devices [11]. The update rate was less than 1 Hz but could be higher for a single puck. Although this system allowed recognizing multiple devices, the interaction surface was very small and thus not suitable for teamwork. Within [3], a back-projection tabletop system enabled several users to simultaneously write and sketch by using intuitive devices. Due to the back-projection, users could only work in a standing position.

In [5] the drawbacks of projection based tracking systems were eliminated by using LC-displays. Infrared sensors and emitters were mounted behind the LC-display. By activating the infrared emitters, objects in front of the screen can be located with the sensors by detecting reflections of the infrared light. Objects can not be identified unambiguously and state detection is not possible.

Also in patent literature as e.g. in US 5,818,421 B1 [12], in US 6,437,314 B1 [13] and in US 2004/0201580 A1 [14] there are different approaches to solve the problem of tracking an input device on an LC-display with infrared technology:

US 5,818,421 B1 [12] describes a pressure sensitive light pen especially suitable for large displays, where the infrared rays are modulated according to the pressure force generated when the light-pen is pressed against the screen.

In US 6,437,314 B1 [13] an input pen is tracked by detecting two infrared beams that are emitted from two separate positions for pivotally scanning over a plane parallel to a surface of a display panel.

Finally, in US 2004/0201580 A1 a pen input device is disclosed, for which the determination of a position in relation to the display device is based on simultaneously emitting an infrared signal and an ultrasonic signal.

All these solutions have in common, that they do not allow two or more input devices being simultaneously tracked on a display unit. None of these solutions (except [12] with restrictions) may transmit a state of the input device to the display device or to a computer for additional interaction purposes.

It is therefore a task of this invention to provide a system and a method for tracking of input devices on an LC-display. The system is further able to transmit a state or an information from the input device to the screen or the corresponding computing device. The invention should be applicable to existing LC-displays.

This task is solved by a system given with the features in claim 1 and for a method whose steps are defined in claim 10.

### Summary of the invention

In order to overcome the above discussed disadvantages associated with current back- and front-projection systems, there is a new approach by using a standard LC-display as an interaction surface. This allows saving space and displaying a bright and sharp image even under wide viewing angles. All the interaction devices and integrated electronics are synchronized by infrared trigger signals. Every registered input device, e.g. an input pen, counts these trigger signals and waits for its specific timeslots. At least two frames exist for each device, which are sequentially interrogated by the system.

By a synchronization via an infrared trigger signals a plurality of input devices can for a user simultaneously tracked. Of course in a very detailed view this tracking occurs quasi-simultaneously. By using frames corresponding to the trigger signals a state defined by pressing a button of an input device can additionally be transmitted to the LC-Display.

The working principle of the invention will now be described more in detail with reference to the accompanying drawings wherein:

Figure 1 Functional involved components of an LC-display for tracking multiple input devices;

Figure 2 Cross sectional view of an LC-display with components enabling the tracking of multiple input devices;

Figure 3 A frameset comprising timeslots for the devices and an overview of the components' synchronisation timings;

Figure 4 Distribution of distance dependent sensitivity to infrared light of two sensors;

Figure 5 Components of an input device;

Figure 6 Signal processing steps carried out in the input device

Figure 7 Signal processing steps carried out on the Master Control Board.

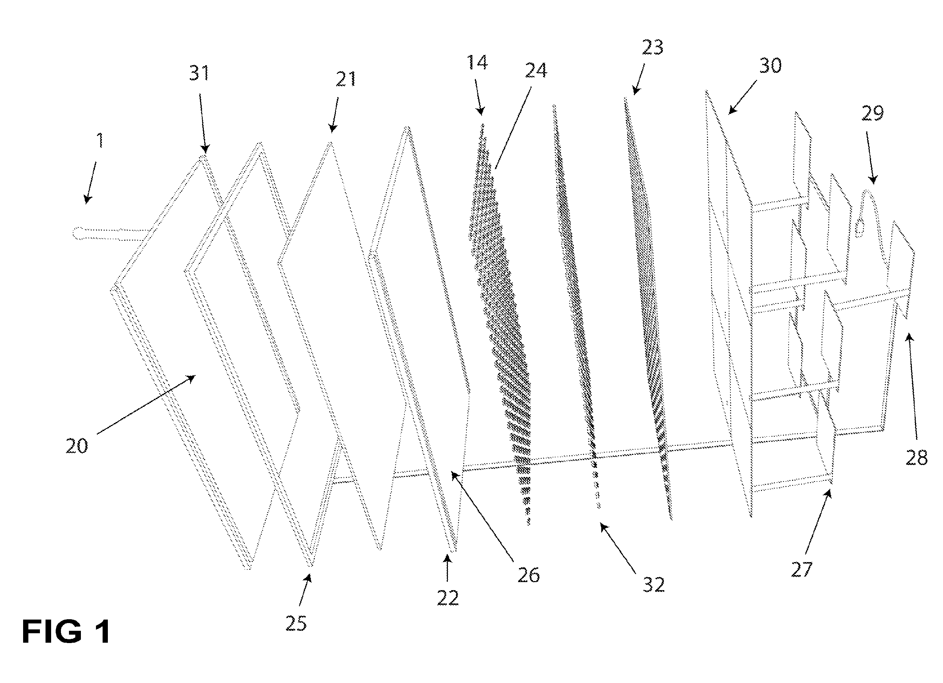

Fig. 1 shows among others the essential standard components of an LC-display, which comprises:
An LC-matrix 21 and the diffusion layer 26 with backlight LEDs 22 arranged at its sides. Also a reflective film 23 is used for increasing the picture's brightness.

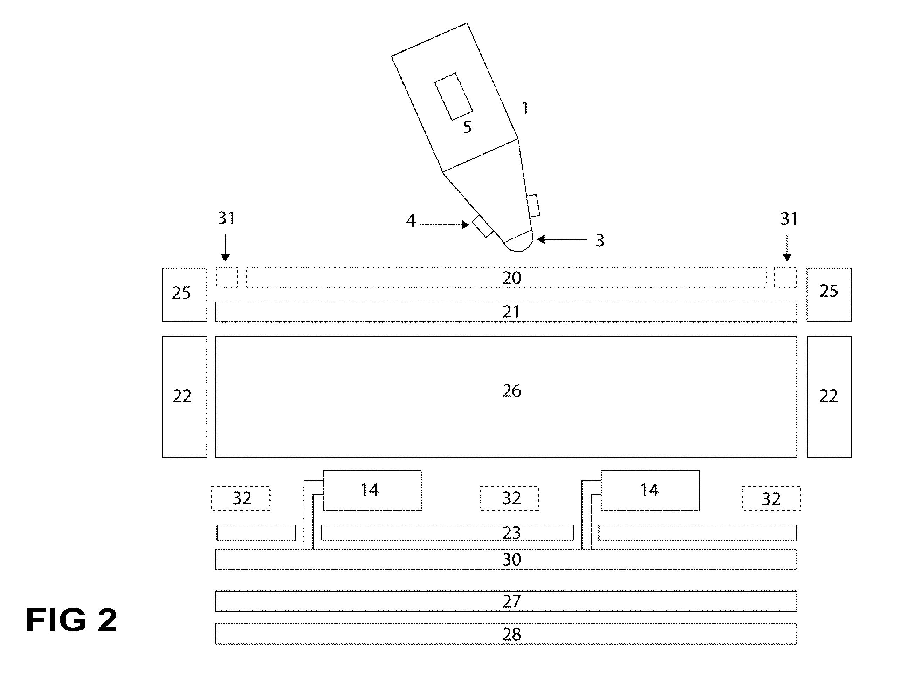

Holes are integrated into the reflective film (23) «behind» the diffusion layer 26 to attach the IR-sensors 14 through the reflective film 23 to the ADC Board 30, see Fig. 2. The IR-sensors 14 are arranged in a so called IR sensor matrix 24, which is aligned «between» the diffusor 26 and the reflective film 23. An IR trigger flash frame 25 is connected to the Master Control Board 28 and mounted «in front of» the LC-matrix 21.

A touch sensitive layer 20 «in front of» the LC-matrix 21 or an IR emitter arrays 32 «near» the IR-sensors 14 can optionally be attached to enable touch sensitivity on the system, that is the LC-display.

There are a plurality of modules «behind» the matrix of IR-sensors 14. These are explained and introduced in detail together with a feasibility consideration.

### Feasibility concerning matrix transparency

In order to evaluate whether a matrix 24 of IR-sensors 14 can track IR-LEDs 3 of an input device 1 in front of the LC-matrix 21, several feasibility tests were performed.

The test setup consisted of a standard 20" LC-display with modified background lighting. The existing neon illumination was replaced by arrays of white LEDs 22, since the oscillation frequency (50kHz) of the original illumination caused interferences. Next, an IR-LED 3 emitting infrared light at 850nm (same as in an input device 1) was placed directly in front of the protection glass of the LC-matrix 21. An IR-sensor 14 was mounted behind the LC-matrix 21 and the diffusor 26, which measured the relative digitized sensor values for different positions of the IR-LED 3 in front of the screen in the xy-plane. The goal of this preliminary study was to find out, whether the complete optical path comprising IR-LED (3), LC-matrix 21, diffusor 26, and IR-sensor 14 has rotation-symmetric characteristics, since this would simplify the analysis algorithm which is also called a «tracking algorithm». Additionally, this preliminary study was used to determine the maximum possible distances in the xy-plane between two IR-sensors 14 in order to have a reliable tracking. For this, the IR-sensors' 14 reception areas have to overlap sufficiently wide enough to avoid or to minimize any detection errors. As a result, the IR-sensors' 14 centres were placed at a distance of 20mm.

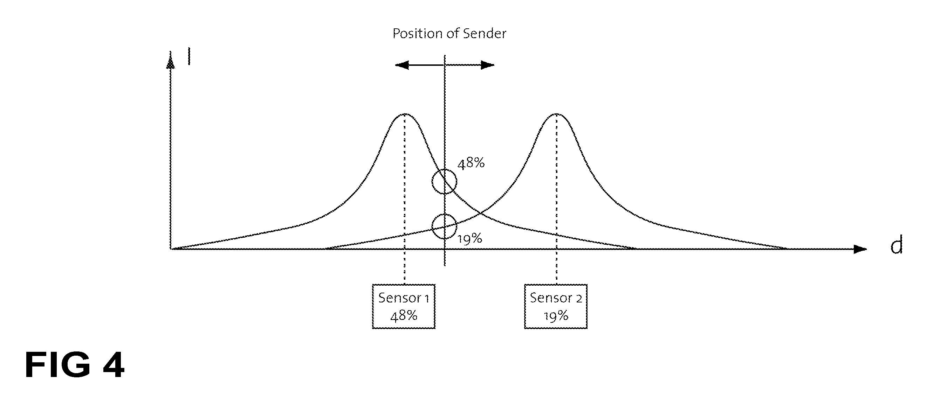

The signal intensity I at each IR-sensor 14 for different positions d of the sender, that is the IR-LED 3, is depicted in Fig. 4. The intensities measured by each IR-sensor 14 allow an interpolation of the position of the sender respectively the IR-LED 3.

The working principle of the method as well as the corresponding system is now explained together with Figures 1 and 2.

The term «module» is used for the modular components of the system. A «module» comprises an Analog-digital-conversion Board 30 - in the following denoted as ADC Board 30 - and a Slave Board 27. 64 IR-sensors (14) are mounted on one ADC Board 30. For making the whole display area of the 20" LC-display interactive, six modules are needed. Modules can be connected in any configuration to cover the desired area. By configuring jumpers on the ADC Board 30, the xy-position in the cluster can be defined.

Each ADC Board 30 consists of 8 ADC integrated circuits ICs and 64 IR-sensors 14. The ADC Board's 30 dimensions are 160mm x 160mm and represent the area of IR sensitivity. 6 modules, each comprising an ADC Board 30 and a Slave Board 27 are used to cover the whole LC-matrix 21 of the 20" LC-display. The modules are mounted next to each other without any gap. For larger screens, more modules can be added to cover the LC-matrix 21 size. The modules have a rectangular shape.

For the proof of concept, a common 20" LC-display was used. The reflector film 23 behind the diffusor 26 was adjusted in order to connect the IR-sensors 14 SFH235FA to the ADC Boards 30. The IR-sensor 14 SFH235FA has a wide aperture angle and contains a daylight filter. Each of those IR-sensors 14 is operated in a reversed-biasing mode at 2.5V. Depending on the IR-intensity, the photo current causes a measurable voltage drop to 0V. This voltage between 0V and 2.5V can be measured by the ADC integrated circuits. The values are converted to digital values from 0 to 255, which equals 8bit binary.

Figure 2 shows a cross-section of some of the components integrated into the LC-display. The IR-sensors 14 are mounted on the ADC Board 30 and arranged in an IR-sensor matrix 24). A reflective film (23) is mounted between the IR-sensors 14 and the ADC Board 30 to reflect light emitted from the backlight illumination 22. The diffusor 26, which uniformly dispenses the light from the background illumination 22, is mounted in front of the sensors 14. Then, the LC-matrix 21, which displays the picture, is placed on top. Additionally, a touch-sensitive layer 20 is also mounted in front of the LC-matrix 21.

### The Control Units (Master and Slaves)

Each ADC Board 30 is connected to a Slave Board 27, being equipped with an ATMega644 microcontroller 2 at 20MHz. Each Slave Board 27 is connected to the Master Board 28 via a serial periphery interface SPI. The Master Board 28 is also equipped with an ATMega644. In addition, it uses an FTDI FT232R chip to communicate with a PC via a USB interface 29. It also generates a 455kHz modulated signal, which is sent using the IR-trigger Flash Frame 25 to synchronise the interaction devices 1. The ADC Boards 30, the Slave Boards 27, and the Master Board 29 are completely integrated into a modified standard LC-display's housing.

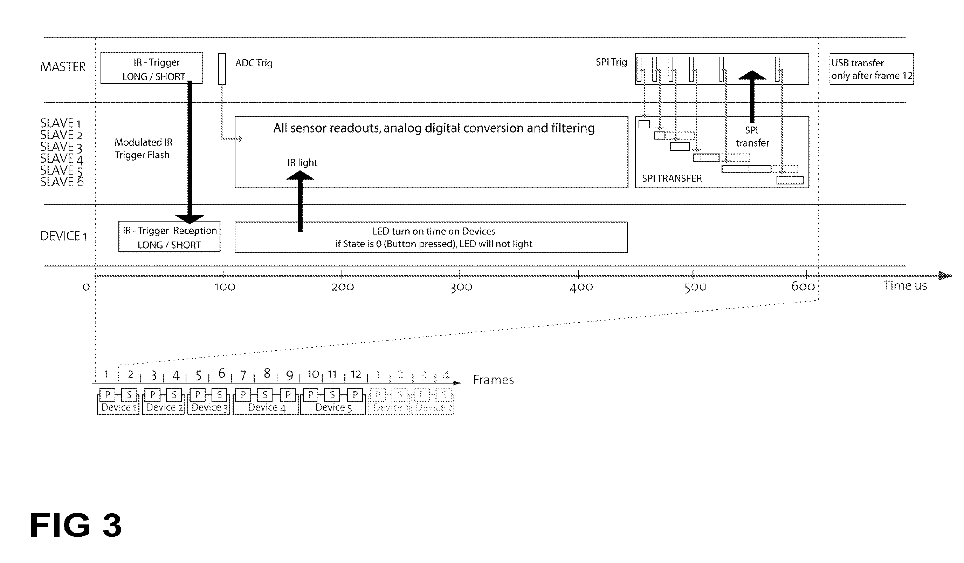

Figure 3 shows a complete frameset with time slots for each input device 1. Two time slots - the term «time slot» is also denoted by the term «frame» - exist for each input device 1, which are sequentially interrogated by the system. A position frame P represents the position of the input device 1. A state frame S is used to indicate the state of a button 5 on the input device 1

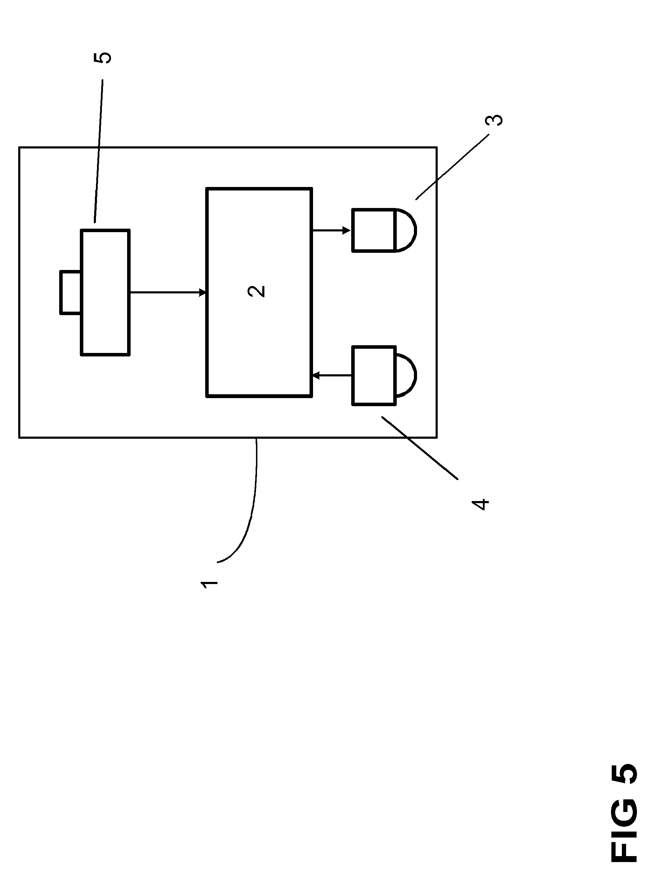

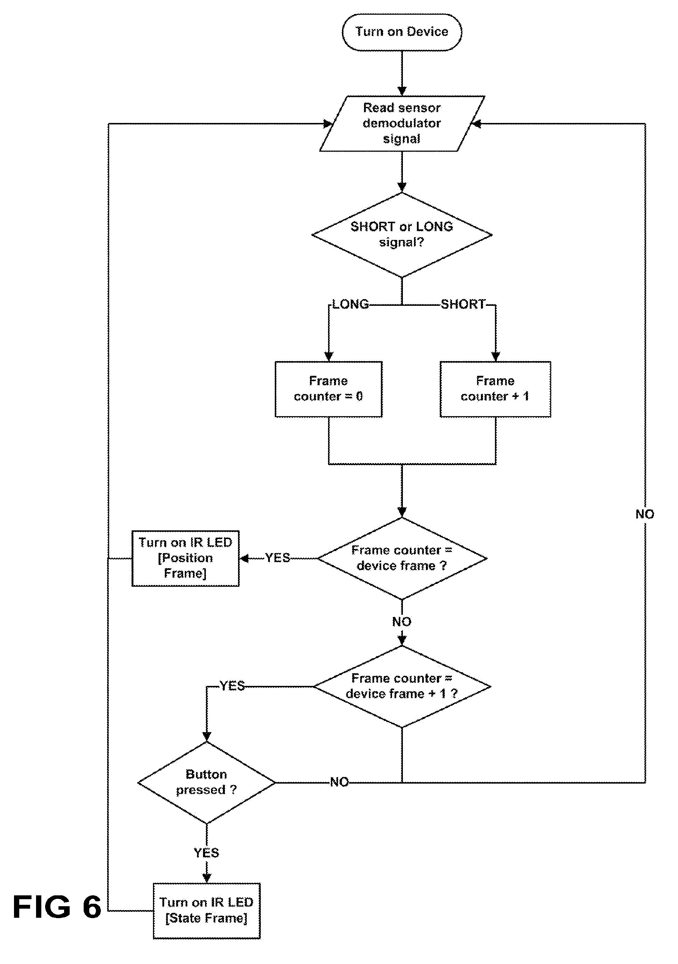

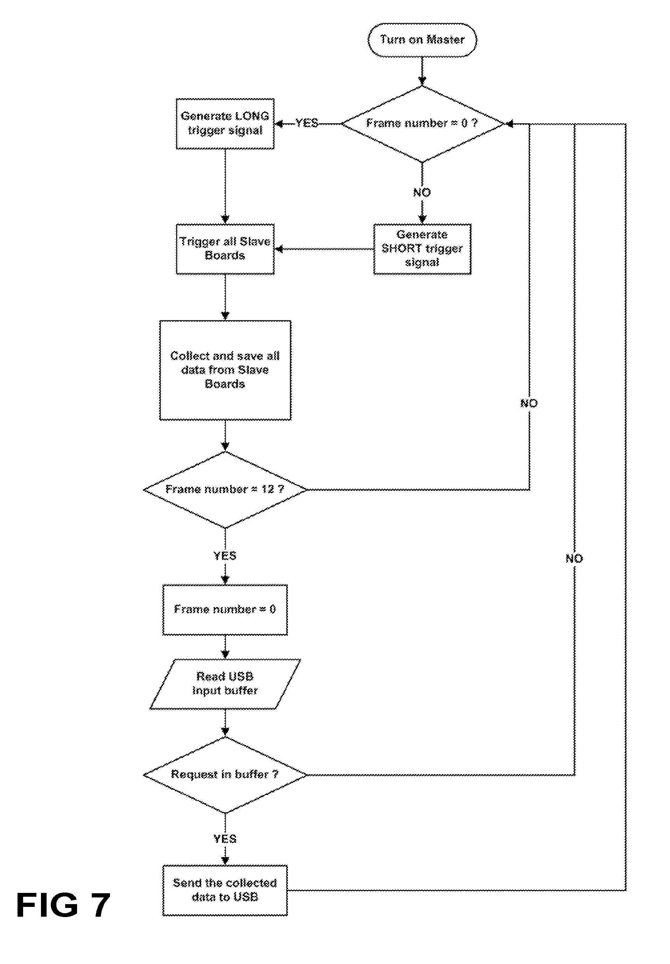

The tracking of an input device 1 comprises the following steps and is explained with reference to the Figures 3, 5, 6, and 7:

1. A modulated trigger signal LONG is emitted via the IR trigger flash frame 25 to the input devices 1.

2. All input devices 1 near the LC-matrix 21 receive this trigger signal LONG with a sensor-demodulator 4. An internal counter in the microcontroller 2 is started, which counts the consecutive incoming trigger signals SHORT.

3. Each input device has its own identification number ID. If this ID is equal to the current value of the counter according to the number of incoming trigger signals, the corresponding input device 1 responds to said incoming trigger signal with «turn on» of the IR-LED 3.

4. After each trigger signal, all IR-sensors 14 behind the LC-matrix 21 are interrogated. The response of each activated input device 1 is logged and together with the counting each input device 1 can be unequivocally identified. After an evaluation of the values received by the IR-sensors 14, these values will be compared with a threshold value in order to reduce possible distortion factors caused by e.g. dimmed light sources.

5. Each input device 1 can have up to 3 frames. In the device's first frame, the IR-LED 3 is always active in order to signal the position of the input device, see Fig 3, -> position frame P. In the second frame, the activation of the IR-LED 3 depends on the status of the corresponding input device 1, e.g. button 5 is pressed. The third bit is optional and can be used to activate a second IR-LED 3 on the device. This can be used to track the orientation of a device by analysing the coordinates of the two measured positions.

6. The emitting of the trigger signal will be repeated until all input devices have been interrogated. The data collected on the ADC Board 30 and the Slave Boards 27 are transmitted to the Master Board 28 when a full set of frames e.g. 12 frames has been acquired. Then, the data is sent to a computer via e.g. a USB-connection, where these data is used for applications running on said computer. The cycle starts again with step 1, see above.

### Data transfer

Each sensor signal is between 0V and 2.5V, depending on the received IR-light's intensity. The ADC Integrated Circuits convert those voltages into 8bit digital values. The Slave Boards 27 work in parallel and collect all digitized values from their ADC Boards 30 they control. In order to reduce the amount of generated data, the Slave Boards 27 pre-filter the 64 bytes of sensor data. If the values are below a certain threshold, they are considered as useless for the localization of a device. Such filtering suppresses unwanted ambient IR-light e.g. from dimmed halogen lamps. The process of collecting and filtering data is triggered by the Master Board 28. The Master Board 28 starts its cyclic procedure by first sending an infrared LONG trigger signal to the devices. All following trigger signals are SHORT encoded. After the devices receive this LONG trigger signal, they start counting the trigger signals. Each input device 1 waits until its defined frame is triggered by a SHORT signal. If a Slave Board 27 filters out some useful data, they are transferred to the Master Board 28 via the SPI bus. The data includes the ADC value and the IR-sensor's 14 absolute coordinates. For each bit sent by a device, the Master Board 28 requests data from all Slave Boards 27. After the Master Board 28 requested data from all Slave Boards, the next frame is triggered until a predefined amount of frames is reached. For tracking 6 styli, 12 frames are needed. The Master Board 28 saves all collected data until all frames are processed. The Master Board 28 is now ready to send the data to the PC. To avoid data collision and buffer overflows, the PC always requests data from the Master Board 28. If a complete set of frames is acquired, it is ready for transfer. The more useful data the Slaves Boards 27 collect, the more time it takes to transfer it via SPI and afterwards from the Master Board 28 to the PC. The system's response is very fast: 2.5kHz trigger frequency, resulting in a overall tracking frequency of >150Hz when using 6 devices simultaneously. For the determination of a device's position, an algorithm consisting of vector addition, triangulation, consideration of intensities, and sensor profile adjustment is used.

A further extension of the existing tracking system is the ability to detect finger touch on the interactive surface. By using an IR emitter array 32 behind the LC-matrix (21) it is possible to radiate trough the screen. Since human skin in front of the LC-matrix 21 reflects a certain amount of this radiated infrared light, it can than again be detected by the already used IR-sensors 14 mounted behind the LC-matrix 21. In fact, every object which reflects infrared light can be detected. To use this kind of touch detection together with device identification tracking, another frame (time slot) is inserted after the last of the 12 devices' frames. In this frame, the IR emitter array (32) is triggered and the system evaluates all IR-sensors 14 on the ADC Board 30. Objects reflecting infrared light, trigger the IR-sensors 14.

Additionally, this IR emitter array 32 can also be used to replace the synchronisation IR trigger flash frame 25) which has been mounted formerly in front of the LC-matrix 21.

Besides generating the infrared rays behind the LC-matrix 21 another technique can be used to detect touch. An acrylic plate 20 - also called a «touch sensitive layer» 20 - is mounted in front of the LC-matrix. By injecting infrared light into the acrylic plate 20 (syn. Touch sensitive layer 20) from the side using «Frustrated Total Internal Reflection»-IR Side LEDs 31 - in brief denoted by «FTIR IR Side LEDs» 31. The rays are totally reflected at the internal surfaces of the plate. If a finger touches this acrylic plate 20, the refraction index is changed locally and some of the rays are out coupled from the plate and eventually reach the IR-sensors 14 behind the LC-matrix 21. This effect is well known as «Frustrated total internal reflection» FTIR [6].

### List of reference signs and used acronyms

- 1: Input device
- 2: Microcontroller
- 3: IR-LED of the input device
- 4: Sensor-demodulator
- 5: Button
- 14: IR-sensor; IR sensitive photodiode
- 20: Touch sensitive layer; Acrylic plate
- 21: LC-matrix
- 22: Backlight LEDs
- 23: Reflective film
- 24: IR sensor array; matrix of IR-sensors 14
- 25: IR trigger flash frame
- 26: Diffusion layer; diffusor
- 27: Slave controller board; Slave Board
- 28: Master controller board; Master Board
- 29: USB-connection
- 30: ADC Board, Analog Digital Conversion Board
- 31: FTIR IR Side LEDs, Frustrated Total Internal Reflection IR Side LEDs
- 32: IR emitter array; back ray LED
- ADC: Analog digital conversion / Analog digital converters
- FTIR: Frustrated Total Internal Reflection
- ID: identification number
- IR: Infrared
- IR-LED: Infrared light emitting diode
- LC: Liquid crystal
- LED: Light emitting diode
- LONG: Type of a first trigger signal (a long modulated signal)
- P: Frame representing the position of an input device
- SHORT: Type of a consecutive trigger signal (a short modulated signal)
- S: Frame representing the status of an input device

### References

[1] Fitzmaurice, G.W.; Ishii, H.; and Buxton, W.: «Bricks: Laying the Foundation for Graspable User Interfaces»; CHI '95: Proceedings of the SIGCHI Conference on Human Factors in Computing Systems; 1995; Denver, Colorado, USA; ACM Press
[2] Fjeld, M.; Bichsel, M.; and Rauterberg, M.: «BUILD-IT: An Intuitive Design Tool Based on Direct Object Manipulation»; Proceedings of the International Gesture Workshop on Gesture and Sign Language in Human-Computer Interaction; 1998; London, UK; Springer Verlag
[3] Ganser, Ch.; Steinemann, A.; Kunz, A.: «InfrActables: Multi-user Tracking System for Interactive Surfaces»; Virtual Reality Conference 2006; Alexandria, USA; ISBN 1087-8270; pp. 253-256
[4] Dietz, P.; and Leigh, D.: «Diamond Touch: A Multi-user Touch Technology»; CHI 2001; Orlando, Florida, USA; ACM Press
[5] Hodges, S.; Izadi, S.; Butler, A.; Rrustemi, A.; and Buxton, B.: ThinSight: Versatile Multi-touch Sensing for Thin Form-factor Displays. In Proceedings of the 20th Annual ACM Conference on User Interface Software and Technology UIST 2007, Rhode Island, USA, ACM Press
[6] Han, J.Y.: «Low-cost Multi-touch Sensing Through Frustrated Total Internal Reflection»; UIST '05: Proceedings of the 18th Annual ACM Symposium on User Interface Software and Technology; Seattle, WA, USA; ACM Press
[7] Ullmer, B.; and Ishii, H.: «The metaDESK: Models and Prototypes for Tangible User Interfaces»; UIST '97, Proceedings of the 10th Annual ACM Symposium on User Interface Software and Technology; 1997; Banff, Alberta, Canada; ACM Press
[8] Sugimoto, M.; Hosoi, K.; Hashizume, H.: «Caretta: A System for Supporting Face-to-face Collaboration by Integrating Personal and Shared Spaces»; CHI '04: Proceedings of the SIGCHI Conference on Human Factors in Computing Systems"; 2004; Vienna, Austria; ACM Press
[9] Microsoft Surface: http://www.microsoft.com/surface
[10] Streitz, N.A.; Geissler, J.; Holmer, T.; Kononi, S.; Müller-Tomfelde, Ch.; Reischl, W.; Rexroth, P.; Seitz, P.; and Steinmetz, R.: «i-LAND: An Interactive Landscape for Creativity and Innovation»; Proceedings of SIGCHI Conference on Human Factors in Computing Systems: the CHI is the Limit; 1999; ACM Press
[11] Patten, J.; Ishii, H.; Hines, J.; and Pangaro, G.: «Sensetable: A Wireless Object Tracking Platform for Tangible User Interfaces»; Proceedings of the SIGCHI Conference on Human Factors in Computing Systems; 2001; ACM Press
[12] US 5,818,421 Ogino et al.
   «Input Interface apparatus for large screen display»
   Date of Patent: Oct. 6, 1998;
   Assignee: Hitachi, Ltd., Tokyo, Japan.
[13] US 6,437,314 B1 Usuda et al.
   «Coordinate input pen, and electronic board, coordinate input system and electronic board system using the coordinate input pen»
   Date of Patent: Aug. 20, 2002;
   Assignee: Hitachi Software Engineering Co., Ltd.,
   Kanagawa Japan.
[14] US 2004/0201580 A1 Fujiwara et al.
   «Pen input/display device»
   Publication date: Oct. 14, 2004;
   Assignee: Hitachi, Ltd., Tokyo, Japan.

## Claims

1. System for tracking an input device (1) on an LC-display, comprising
- an LC-display with LC-matrix (21) and a diffusion layer (26) and
- input device (1) having IR-LEDs (3),
where the input device (1) is located in front of the LC-matrix (21) and the diffusion layer is behind the LC-matrix (21)
**characterized in** by
- an IR-sensor matrix (14, 24) arranged behind the diffusion layer (26) in order to receive signals emitted by the IR-LEDs (3) of the input device (1), whose signals are in response to a trigger signal (LONG, SHORT) emitted from an IR trigger flash frame (25) being arranged in front of the IR-sensor matrix (14, 24);
- means (27, 28, 30) for evaluating the position of the input device (1) from the signal received by the IR-Sensor matrix (14, 24).

2. System according to claim 1
**characterized in** by
the means (27, 28, 30) for evaluating the position of the input device (1) comprise in a plurality of modules
- an Analog-digital-conversion board (30) on which IR-sensors (14) are mounted and arranged in a matrix (24);
- a Slave Board (27) connected with the Analog-digital-conversion Board (30);
where each Slave Board (27) is connected with a Master Controller Board (32).

3. System according to claim 1 or 2
**characterized in** by
the modules having a rectangular shape and being mounted next to each other without any gap in order to cover the area of the LC-matrix (21).

4. System according to one of the claims 1 to 3 comprising a plurality of input devices (1).

5. System according to one of the claims 1 to 4
**characterized in** by
the IR trigger flash frame (25) being arranged in front of the LC-matrix (21).

6. System according to one of the claims 1 to 5
**characterized in** by
a sensor-demodulator (4) being part of each input device (1) for receiving trigger signals (LONG, SHORT) emitted from the IR trigger flash frame (25).

7. System according to one of the claims 1 to 6
**characterized in** by
an additional IR emitter array (32) arranged in the same plane as th IR-sensor matrix (14, 24) which additional emitter array (32) emits IR light passing through the diffusion layer (26) and the LC-matrix (21) in order that the IR light is received by the IR sensors matrix (14,24)) after being reflected at another external body for determining the position of the said external object.

8. System according to one of the claims 1 to 6
**characterized in** by
an additional touch sensitive layer (20) mounted in front of the LC-matrix (21), which is responsive to touches with «Frustrated Total Internal Reflection IR Side LEDs» (31) being mounted at the side of the touch sensitive layer (20) emitting IR light and said IR light being decoupled by touching the additional touch sensitive layer (20) and being detected after passing through the LC-matrix (21) and diffusor (26) by the sensor matrix (14, 24) for determining the position of the said touches.

9. System according to one of the claims 1 to 8
**characterized in** by
a button (5) on each input device (5) for controlling the IR-LED (3) in response to the trigger signals (LONG, SHORT)..

10. Method for tracking an input device (1) on an LC-display comprising
- an LC-display with LC-matrix (21) and a diffusion layer (26) and
- an input device (1) each having IR-LEDs (3),
where the input devices (1) are located in front of the LC-matrix (21) and the diffusion layer (26) is behind the LC-matrix (21)
comprising the steps
- emitting trigger signals (LONG, SHORT) from an IR trigger flash frame (25) being mounted in front of the LC-matrix (21);
- receiving trigger signals (LONG, SHORT) by a Sensor-modulator (4) of a input device (1);
- in response to the received trigger signals (LONG, SHORT) emitting signals from an IR-LED (3) of the input devices (1);
- receiving signals from an IR-LED (3) by IR-sensors (14) arranged in an IR-Sensor matrix (24) being located behind the LC-matrix (21);
- evaluating the position of the input device (1) via the signals received by the IR-sensors (14).

11. Method according to claim 10
where
means (27, 28, 30) are provided for evaluating the position of the input device (1) via the signals received by the IR-sensors (14) these means (27, 28, 30) comprising a plurality of modules
- an Analog-digital-conversion board (30) on which the IR-sensors (14) are mounted and arranged in the IR-sensor matrix (24);
- a Slave Board (27) connected with the Analog-digital-conversion board (30);
where each Slave Board (27) is connected to a Master Controller Board (32).

12. Method according to claim 10 or 11
**characterized in** by
emitting the signals from the IR-LED (3) of the input device
(1) takes place in a sequence of frames, where the first frame is triggered by a first trigger signal (LONG) from the IR trigger flash frame (25).

13. Method according to claim 12 comprising a plurality of input devices (1).

14. Method according to claim 13
**characterized in** by
a unique identification number (ID) of each input device (1) and a counter on each input device (1) in order to emit a signal from an IR-LED (3) when the number of incoming trigger signals (LONG, SHORT) equals the identification number (ID).

15. Method according to one of the claims 12 to 14
**characterized in** by
two subsequent frames (P, S) are dedicated to one input device (1), where a first frame (P) of these subsequent frames (P, S) represents the position of said input device (1) and the second frame (S) represents the status of said input device (1).

16. Method according to one of the claims 12 to 14
**characterized in** by
three subsequent frames (P, S) are dedicated to one input device (1), where a first frame (P) of these subsequent frames (P, S) represents the position of said input device (1) and the second frame (S) represents the state of said input device (1) and the third frame, which is used for a further IR-LED (3) of an input device (1) in order to derive the orientation of said input device (1).
